# EUROPEAN PATENT APPLICATION

(11) **EP 3 670 455 A1**
(43) Date of publication of application: **24.06.2020**
(21) Application number: 19209525.5
(22) Date of filing: 15.11.2019
(51) Int. Cl.: C01G 53/00, H01M 4/90, H01M 12/08

(54) **MIXED CONDUCTOR, ELECTROCHEMICAL DEVICE INCLUDING THE SAME, AND METHOD OF PREPARING MIXED CONDUCTOR**

(30) Priority: 18.12.2018 KR 20180164307
(71) Applicant: Samsung Electronics Co., Ltd., Gyeonggi-do 16677 (KR)
(72) Inventor: LEE, Hyunpyo, 16678, Gyeonggi-do (KR); KWON, Hyukjae, 16678, Gyeonggi-do (KR); MA, Sangbok, 16678, Gyeonggi-do (KR); SEO, Donghwa, 16678, Gyeonggi-do (KR); IM, Dongmin, 16678, Gyeonggi-do (KR)
(74) Representative: Elkington and Fife LLP

(57) **Abstract**

A mixed conductor represented by Formula 1:

Formula 1 A_{1±x}M_{2±y}O_{4-δ},

wherein, in Formula 1, A is at least one Group 1 element of the Periodic Table of the Elements, M is at least one metal element of Groups 2 to 16 of the Periodic Table of the Elements, with the proviso that M is neither Ti nor Mn, and 0≤x<1, 0≤y<1, and 0≤δ≤1 are satisfied.

## Description

### FIELD OF THE INVENTION

The present disclosure relates to a mixed conductor, an electrochemical device including the same, and methods of preparing the mixed conductors.

### BACKGROUND OF THE INVENTION

In an electrochemical device, such as a battery, an electrochemical reaction occurs where ions and electrons move along separate movement paths between a plurality of electrodes and then combine at the electrodes.

An ion conductor for transferring ions and an electron conductor for transferring electrons are mixed and arranged in the electrodes.

In the electrodes, for example, an organic liquid electrolyte is used as the ion conductor, and a carbon-based conductive agent is used as the electron conductor. The organic liquid electrolyte and the carbon-based conductive agent are easily decomposed by radicals that are produced by the electrochemical reactions, thereby deteriorating the performance of batteries. In the electrodes, the carbon-based conductive agent inhibits the diffusion/transfer of ions, and the organic liquid electrolyte inhibits the transfer of electrons, so that internal resistance in the battery increases.

Therefore, there remains a need for a conductor that is chemically stable with respect to the byproducts of electrochemical reactions and can simultaneously transfer ions and electrons.

### SUMMARY OF THE INVENTION

Provided are mixed conductors that are chemically stable and simultaneously transfer ions and electrons.

Provided are electrochemical devices including the mixed conductors.

Provided are methods of preparing the mixed conductors, the cathode, and the lithium-air battery.

Additional aspects will be set forth in part in the description which follows and, in part, will be apparent from the description, or may be learned by practice of the presented embodiments.

According to an aspect of an embodiment, there is provided a mixed conductor represented by Formula 1.

Formula 1 A_{1±x}M_{2±y}O_{4-δ}

where in, Formula 1, A is at least one Group 1 element of the Periodic Table of the Elements, M is at least one metal element of Groups 2 to 16 of the Periodic Table of the Elements, with the proviso that M is neither Ti nor Mn, and 0≤x<1, 0≤y≤1, and 0≤δ≤1 are satisfied.

According to an aspect of another embodiment, a lithium-airy battery includes: a cathode including the mixed conductor; an anode including a lithium metal; and an electrolyte between the cathode and the anode.

According to an aspect of another embodiment, a method of preparing a mixed conductor includes: providing an element A precursor; mixing the element A precursor and an element M precursor to prepare a mixture; and heat-treating the mixture in a solid phase to prepare the mixed conductor; wherein A is at least one Group 1 element of the Periodic Table of the Elements, M is at least one metal element of Groups 2 to 16 of the Periodic Table of the Elements, with the proviso that M is neither Ti nor Mn.

Also disclosed is a method of manufacturing a cathode, the method including: providing the mixed conductor; providing an oxygen oxidation-reduction catalyst, a binder, and a solvent; mixing the mixed conductor, the oxygen oxidation-reduction catalyst, the binder, and the solvent to obtain a cathode material; and disposing the cathode material on a surface of a substrate to manufacture the cathode.

Also disclosed is a method of manufacturing a lithium-air battery, the method including: disposing an electrolyte layer on an anode comprising lithium; and disposing a cathode comprising the mixed conductor on the electrolyte layer to manufacture the lithium-air battery.

### BRIEF DESCRIPTION OF THE DRAWINGS

These and/or other aspects will become apparent and more readily appreciated from the following description of the embodiments, taken in conjunction with the accompanying drawings in which:
FIG. 1 is a schematic view illustrating a transition process of Li in a spinel crystal structure of a mixed conductor according to an embodiment of the present disclosure;
FIG. 2 is a graph of intensity (arbitrary units, a.u.) vs. diffraction angle (degrees 2-theta) showing the results of X-Ray diffraction analysis (XRD) of Examples 1 to 3; and
FIG. 3 is a schematic view illustrating the structure of a lithium-air battery according to an embodiment of the present disclosure.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

The present disclosure, described below, may be variously modified and may have various shapes, examples of which are illustrated in the accompanying drawings and will be described in detail with reference to the accompanying drawings. However, it should be understood that the exemplary embodiments according to the concept of the present disclosure are not limited to the embodiments which will be described hereinbelow with reference to the accompanying drawings, but various modifications, equivalents, additions and substitutions are possible, without departing from the scope of the present disclosure.

The terminology used herein is for the purpose of describing particular embodiments only and is not intended to restrict the present disclosure. As used herein, "a", "an," "the," and "at least one" do not denote a limitation of quantity, and are intended to include both the singular and plural, unless the context clearly indicates otherwise. For example, "an element" has the same meaning as "at least one element," unless the context clearly indicates otherwise. It will be further understood that the terms "comprise", "include", "have", etc. when used in this specification, specify the presence of stated features, integers, steps, operations, elements, components, and/or combinations of them but do not preclude the presence or addition of one or more other features, integers, steps, operations, elements, components, and/or combinations thereof. As used herein the term "/" may be interpreted as "and" or "or" including any and all combinations of one or more of the associated listed items depending on the situation. "Or" means "and/or."

In the drawings, diameters, lengths, and thicknesses are enlarged or reduced in order to clearly illustrate various components, layers, and regions. Like reference numerals refer to like elements throughout the specification. It is to be understood that when a layer, film, region, plate, or the like is referred to as being "on" or "on" another portion throughout the specification, this includes not only the case directly above another portion but also the case where there is another portion in between. Although the terms first, second, etc. may be used herein to describe various elements, these elements should not be limited by these terms. These terms are only used to distinguish one element, from another element.

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within ± 30%, 20%, 10% or 5% of the stated value.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Exemplary embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

As used herein, the "mixed conductor" refers to a conductor that simultaneously provides ionic conductivity and electronic conductivity. For example, the mixed conductor used herein simultaneously provides ionic and electronic conductivity that are improved as compared with those of Li₄Ti₅O₁₂.

Electronic conductivity may be determined by an eddy current method or a kelvin bridge method. The electrical conductivity can be determined according to ASTM B-193, "Standard Test Method for Resistivity of Electrical Conductor Materials," e.g., at 20°C, or according to ASTM E-1004, "Standard Test Method for Determining Electrical Conductivity Using the Electromagnetic (Eddy-Current) Method," e.g., at 20°C. Additional details may be determined by one of skill in the art without undue experimentation.

Ionic conductivity may be determined by a complex impedance method at 20°C, further details of which can be found in J.-M. Winand et al., "Measurement of Ionic Conductivity in Solid Electrolytes," Europhysics Letters, vol. 8, no. 5, p. 447-452, 1989.

Hereinafter, mixed conductors, electrochemical devices including the same, and methods of preparing the mixed conductors according to example embodiments will be described in more detail.

A mixed conductor according to an embodiment is represented by Formula 1.

Formula 1 A_{1±x}M_{2±y}O_{4-δ}

In Formula 1, A is at least one Group 1 element of the Periodic Table of the Elements, M is at least one metal element of Group 2 to 16 of the Periodic Table of the Elements, with the proviso that M is neither Ti nor Mn, and 0≤x<1, 0≤y≤1, and 0≤δ≤1 are satisfied. δ may indicate an oxygen vacancy content.

The mixed conductor has the above composition in which A is at least one Group 1 element of the Periodic Table of the Elements, M is at least one metal element of Group 2 to 16 of the Periodic Table of the Elements, M is at least one metal other than Ti and Mn, thereby simultaneously improving ionic conductivity and electronic conductivity. Further, the mixed conductor, which is an inorganic oxide, is stable to heat, and is chemically stable to radicals accompanied by electrochemical reactions.

A may include at least one alkali metal of Li, Na, K, Rb, or Cs. For example, A may include at least one alkali metal of Li, Na, or K. For example, A may be Li.

M may be at least one metal element of Mg, Ca, Sr, Fe, Ru, Co, Ni, Pd, Ag, Pt, Cu, Zn, Cd, Hg, Ge, Sn, Pb, Po, Sc, Y, La, Ce, Pr, Nd, Pm, Sm, Eu, Gd, Tb, Dy, Ho, Er, Tm, Yb, Lu, Cr, Rh, Au, Al, Ga, In, TI, Sb, Bi, Zr, Hf, Mo, Tc, Re, Ir, V, Nb, Ta, or Tc.

For example, M may be at least one metal element of Co, Ni, Fe, V, Zr, Cu, Zn, Mo, Ru, Nb, Ta, Pd, or Ag. In an aspect, M comprises at least one of Ni, V, Nb, or Ta. An embodiment in which M is at least one of Ni and Nb is mentioned.

In an aspect, 0≤x<0.5, 0<x<0.4, or 0.1<x<0.2; 0≤y<1, 0<y<0.8, or 0.1<y<0.4; and 0≤δ<1, 0<δ<0.5, or 0.1≤δ≤0.5.

Formula 1 above may be represented by Formula 2.

Formula 2 A_{1±x'}M'_{2-z'}M"_{z'}O_{4-δ'}

In Formula 2, A is a Group 1 element of the Periodic Table of the Elements, M' and M" are each independently at least one metal element of Groups 2 to 16 of the Periodic Table of the Elements, with the proviso that M' or M" is neither Ti nor Mn, and 0≤x'<1, 0<z'≤1, and 0≤δ'≤1 are satisfied. δ' may indicate an oxygen vacancy content. In an aspect, 0≤x'<0.5, 0<x'<0.4, or 0.1<x'<0.2; 0<z'≤1, 0<z'<0.8, or 0.1<z'<0.4; and 0≤5'<1, 0<δ'<0.5, or 0.1≤δ'≤0.5.

Put another way, in Formula 1, M_{2±y} may comprise (e.g. be replaced by) M'_{2-z'}M"_{z'}.

M' and M" are metal elements and are different from each other. For example, M' and M" are metal elements having different oxidation numbers from each other or having the same oxidation numbers as each other. When the metal elements having different oxidation numbers from each other are mixed, and while not wanting to be bound by theory, it is understood that a new state density function is added by the hybrid orbitals formed by mixing the molecular orbitals of M' and M", and thus a bandgap between a valence band and a conduction band is reduced. As a result, the electronic conductivity of the mixed conductor is improved.

According to an embodiment, M' and M" may be metal elements having different oxidation numbers from each other. For example, the oxidation number of the metal element of M' may be smaller than the oxidation number of the metal element of M". For example, the metal element M" may be a pentavalent cation.

Formula 1 may be represented by Formula 3 or 4:

Formula 3 Li_{1±x}M_{2±y}O_{4-δ}, or

Formula 4 Li_{1±x'}M'_{2-z'}M"_{z'}O_{4-δ'}

In Formulae 3 and 4, M, M' and M" are each independently at least one metal element of Mg, Ca, Sr, Fe, Ru, Co, Ni, Pd, Ag, Pt, Cu, Zn, Cd, Hg, Ge, Sn, Pb, Po, Sc, Y, La, Ce, Pr, Nd, Pm, Sm, Eu, Gd, Tb, Dy, Ho, Er, Tm, Yb, Lu, Cr, Rh, Au, Al, Ga, In, Tl, Sb, Bi, Zr, Hf, Mo, Re, Ir, V, Nb, Ta, or Tc, and 0≤x<1, 0≤y≤1, 0≤δ≤1, 0≤x'<1, 0<z'≤1, and 0≤δ'≤1 are satisfied. δ and δ' may indicate an oxygen vacancy content.

For example, M and M' may be Mg, Ca, Sr, Fe, Ru, Co, Ni, Pd, Ag, Pt, Cu, Zn, Cd, Hg, Ge, Sn, Pb, Po, Sc, Y, La, Ce, Pr, Nd, Pm, Sm, Eu, Gd, Tb, Dy, Ho, Er, Tm, Yb, Lu, Cr, Rh, Au, Al, Ga, In, Tl, Sb, Bi, Zr, Hf, Mo, Re, or Ir, and M" may be V, Nb, Ta, or Tc.

For example, M and M' may be Co, Ni, Fe, Zr, Cu, Zn, Mo, Ru, Pd, or Ag, and M" may be V, Nb, or Ta. An aspect in which M and M' are Ni and M" is Nb is mentioned.

In an aspect, 0≤x<0.5, 0<x<0.4, or 0.1<x<0.2; 0≤y<1, 0<y<0.8, or 0.1<y<0.4; and 0≤δ<1, 0<δ<0.5, or 0.1≤δ≤0.5. Also, in an aspect, 0≤x'<0.5, 0<x'<0.4, or 0.1<x'<0.2; 0<z'≤1, 0<z'<0.8, or 0.1<z'<0.4; and 0≤δ'<1, 0<δ'<0.5, or 0.1≤5'≤0.5.

The mixed conductor may include, but is not limited to, at least one of Li_{1±x}Co_{2±y}O_{4-δ} wherein 0≤x<1, 0≤y≤1, and 0≤δ≤1; Li_{1±x}Ni_{2±y}O_{4-δ} wherein 0≤x<1, 0≤y≤1, and 0≤δ≤1; Li_{1±x}Fe_{2±y}O_{4-δ} wherein 0≤x<1, 0≤y≤1, and 0≤δ≤1; Li_{1±x}Zr_{2±y}O_{4-δ} wherein 0≤x<1, 0≤y≤1, and 0≤δ≤1; Li_{1±x}Cu_{2±y}O_{4-δ} wherein 0≤x<1, 0≤y≤1, and 0≤δ≤1; Li_{1±x}Zn_{2±y}O_{4-δ} wherein 0≤x<1, 0≤y≤1, and 0≤δ≤1; Li_{1±x}Mo_{2±y}O_{4-δ} wherein 0≤x<1, 0≤y≤1, and 0≤δ≤1; Li_{1±x}Ru_{2±y}O_{4-δ} wherein 0≤x<1, 0≤y≤1, and 0≤δ≤1; Li_{1±x}Pd_{2±y}O_{4-δ} wherein 0≤x<1, 0≤y≤1, and 0≤δ≤1; and Li_{1±x}Ag_{2±y}O_{4-δ} wherein 0≤x<1, 0≤y≤1, and 0≤δ≤1; Li_{1±x'}Co_{2-z'}V_{z}O_{4-δ'} wherein 0≤x'<1, 0<z'≤1, and 0≤δ'≤1; Li_{1±x'}Ni_{2-z'}V_{z'}O_{4-δ'} wherein 0≤x'<1, 0<z'≤1, and 0≤δ'≤1; Li_{1±x'}Fe_{2-z'}V_{z'}O_{4-δ'} wherein 0≤x'<1, 0<z'≤1, and 0≤δ'≤1; Li_{1±x'}Zr_{2-z}V_{z'}O_{4-δ'} wherein 0≤x'<1, 0<z'≤1, and 0≤δ'≤1; Li_{1±x'}Cu_{2-z'}V_{z}O_{4-δ'} wherein 0≤x'<1, 0<z'≤1, and 0≤δ'≤1; Li_{1±x'}Zn_{2-z'}V_{z'}O_{4-δ'} wherein 0≤x'<1, 0<z'≤1, and 0≤δ'≤1; Li_{1±x'}Mo_{2-z'}V_{z'}O_{4-δ'} wherein 0≤x'<1, 0<z'≤1, and 0≤δ'≤1; Li_{1±x'}Ru_{2-z'}V_{z'}O_{4-δ'} wherein 0≤x'<1, 0<z'≤1, and 0≤δ'≤1; Li_{1±x'}Pd_{2-z'}V_{z'}O_{4-δ'} wherein 0≤x'<1, 0<z'≤1, and 0≤δ'≤1; and Li_{1±x'}Ag_{2-z'}V_{z'}O_{4-δ'} wherein 0≤x'<1, 0<z'≤1, and 0≤δ'≤1; Li_{1±x'}Co_{2-z'}Nb_{z'}O_{4-δ'} wherein 0≤x'<1, 0<z'≤1, and 0≤δ'≤1; Li_{1±x'}Ni_{2-z'}Nb_{z'}O_{4-δ'} wherein 0≤x'<1, 0<z'≤1, and 0≤δ'≤1; Li_{1±x'}Fe_{2-z'}Nb_{z'}O_{4-δ'} wherein 0≤x'<1, 0<z'≤1, and 0≤δ'≤1; Li_{1±x'}Zr_{2-z'}Nb_{z'}O_{4-δ'} wherein 0≤x'<1, 0<z'≤1, and 0≤δ'≤1; Li_{1±x'}Cu_{2-z'}Nb_{z'}O_{4-δ'} wherein 0≤x'<1, 0<z'≤1, and 0≤δ'≤1; Li_{1±x'}Zn_{2-z'}Nb_{z'}O_{4-δ'} wherein 0≤x'<1, 0<z'≤1, and 0≤δ'≤1; Li_{1±x'}Mo_{2-z'}Nb_{z'}O_{4-δ'} wherein 0≤x'<1, 0<z'≤1, and 0≤δ'≤1; Li_{1±x'}Ru_{2-z'}Nb_{z'}O_{4-δ'} wherein 0≤x'<1, 0<z'≤1, and 0≤δ'≤1; Li_{1±x'}Pd_{2-z'}Nb_{z'}O_{4-δ'} wherein 0≤x'<1, 0<z'≤1, and 0≤δ'≤1; and Li_{1±x'}Ag_{2-z'}Nb_{z'}O_{4-δ'} wherein 0≤x'<1, 0<z'≤1, and 0≤δ'≤1; and Li_{1±x'}Co_{2-z'}Ta_{z'}O_{4-δ'} wherein 0≤x'<1, 0<z'≤1, and 0≤δ'≤1; Li_{1±x'}Ni_{2-z}Ta_{z'}O_{4-δ'} wherein 0≤x'<1, 0<z'≤1, and 0≤δ'≤1; Li_{1±x'}Fe_{2-z'}Ta_{z'}O_{4-δ'} wherein 0≤x'<1, 0<z'≤1, and 0≤δ'≤1; Li_{1±x'}Zr_{2-z'}Ta_{z'}O_{4-δ'} wherein 0≤x'<1, 0<z'≤1, and 0≤δ'≤1; Li_{1±x'}Cu_{2-z'}Ta_{z'}O_{4-δ'} wherein 0≤x'<1, 0<z'≤1, and 0≤δ'≤1; Li_{1±x'}Zn_{2-z'}Ta_{z'}O_{4-δ'} wherein 0≤x'<1, 0<z'≤1, and 0≤δ'≤1; Li_{1±x'}Mo_{2-z}Ta_{z'}O_{4-δ'} wherein 0≤x'<1, 0<z'≤1, and 0≤δ'≤1; Li_{1±x'}Ru_{2-z'}Ta_{z'}O_{4-δ'} wherein 0≤x'<1, 0<z'≤1, and 0≤δ'≤1; Li_{1±x'}Pd_{2-z'}Ta_{z'}O_{4-δ'} wherein 0≤x'<1, 0<z'≤1, and 0≤δ'≤1; or Li_{1±x'}Ag_{2-z'}Ta_{z'}O_{4-δ'} wherein 0≤x'<1, 0<z'≤1, and 0≤δ'≤1. Any of the suitable mixed conductors represented by Formulae 1 to 4 above may be used.

The mixed conductor may include a phase having a spinel crystal structure. For example, the mixed conductor may be formed to have a spinel crystal structure. The mixed conductor may be electrochemically stable because it has a spinel crystal structure.

The spinel crystal structure may include an Fd3m space group. For example, the spinel crystal structure may include a cubic spinel crystal structure.

The mixed conductor may have a peak at a diffraction angle of 36.0±2.5° 2θ and a diffraction angle of 43.0±2.5° 2θ in when analyzed by XRD using Cu Kα radiation. Further, the mixed conductor may maintain the same crystal structure even when some of the transition metals are substituted with different types of transition metals.

The mixed conductor has suitable electronic conductivity and suitable ionic conductivity. For example, the mixed conductor simultaneously has ionic conductivity and electronic conductivity greater than that of Li₄Ti₅O₁₂ having a spinel structure.

The mixed conductor has an electronic conductivity of about 4.5x10⁻⁹ Siemens per centimeter (S/cm) or more. For example, the mixed conductor may have an electronic conductivity of about 5x10⁻⁹ S/cm or more, about 1x10⁻⁸ S/cm or more, about 1x10⁻⁷ S/cm or more, about 1x10⁻⁶ S/cm or more, about 1x10⁻⁵ S/cm or more, or about 1x10⁻⁴ S/cm or more. For example, the mixed conductor may have an electronic conductivity of 4.5x10⁻⁹ S/cm to about 2x10⁻³ S/cm, about 5x10⁻⁹ S/cm to about 5x10⁻⁴ S/cm, about 1x10⁻⁸ S/cm to about 8x10⁻⁴ S/cm, about 1x10⁻⁷ S/cm to about 1x10⁻⁵ S/cm, about 1x10⁻⁶ S/cm to about 2x10⁻⁵ S/cm, about 1x10⁻⁵ S/cm to about 3x10⁻⁴ S/cm, or about 1x10⁻⁴ S/cm to about 2x10⁻² S/cm. When the mixed conductor has such electronic conductivity, the internal resistance of the electrochemical device including the mixed conductor is reduced.

The mixed conductor has an ionic conductivity of about 7x10⁻⁸ S/cm or more. For example, the mixed conductor may have an ionic conductivity of about 8x10⁻⁸ S/cm or more, about 9x10⁻⁸ S/cm or more, about 1x10⁻⁷ S/cm or more, or about 1x10⁻⁶ S/cm or more. For example, the mixed conductor may have an ionic conductivity of about 7x10⁻⁸ S/cm to about 2x10⁻⁴ S/cm, about 8x10⁻⁸ S/cm to about 5x10⁻⁴ S/cm, about 9x10⁻⁸ S/cm to about 1x10⁻⁵ S/cm, about 1x10⁻⁷ S/cm to about 8x10⁻⁶ S/cm, or about 1x10⁻⁶ S/cm to about 9x10⁻⁶ S/cm. The mixed conductor has such ionic conductivity, so that the internal resistance of the electrochemical device including the mixed conductor is reduced.

The bandgap of the mixed conductor between a valence band and a conduction band is less than the bandgap of Li₄Ti₅O₁₂. For example, the bandgap of the mixed conductor between the valence band and the conduction band is about 2.5 electron volts (eV) or less, about 2.3 eV or less, about 2.0 eV or less, about 1.8 eV or less, about 1.6 eV or less, about 1.4 eV or less, or about 1.2 eV or less. For example, the bandgap of the mixed conductor between the valence band and the conduction band is about 2.5 eV to about 1.2 eV, about 2.3 eV to about 1.4 eV, about 2.0 eV to about 1.6 eV, about 1.8 eV to about 1.4 eV, about 1.6 eV to about 1.2 eV, about 1.6 eV to about 1 eV. When the bandgap of the mixed conductor between the valence band and the conduction band has such low values, the movement of electrons from the valence band to the conduction band is facilitated, so that the electronic conductivity of the mixed conductor is improved.

The mixed conductor may include an oxygen vacancy. While not wanting to be bound by theory, it is understood that the oxygen vacancy provides improved ionic conductivity. For example, when the mixed conductor includes an oxygen vacancy, the position of a state density function moves near Fermi energy (Ef), and thus the bandgap between the valence band and the conduction band is reduced. As a result, not only the ionic conductivity, but also the electronic conductivity of the mixed conductor is further improved.

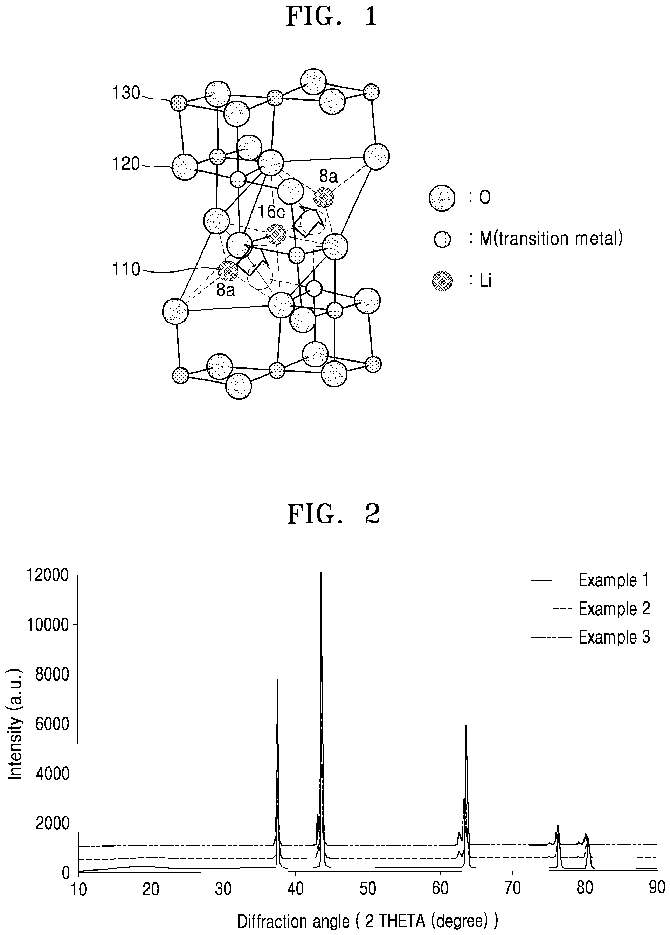

In the mixed conductor, for example, referring to FIG. 1, A is located on at least one of a tetrahedral 8a site and an octahedral 16c site of a spinel crystal structure. Referring to FIG. 1, when A is lithium, an activation energy (Ea, 8a->16c->8a) for a lithium transition from a tetrahedral 8a site to another tetrahedral 8a site via the octahedral 16c site is less than an activation energy for a lithium transition from a tetrahedral 8a site to another tetrahedral 8a site via an octahedral 16c site(Ea, 8a->16c->8a)in Li₄Ti₅O₁₂. When the mixed conductor has an activation energy (Ea, 8a->16c->8a) for a lithium transition from a tetrahedral 8a site to another tetrahedral 8a site via an octahedral 16c site which is less than a lithium transition from a tetrahedral 8a site to another tetrahedral 8a site via an octahedral 16c site in Li₄Ti₅O₁₂, the transfer and/or diffusion of lithium ions in the mixed conductor becomes easier. As a result, the ionic conductivity of the mixed conductor is increased as compared with Li₄Ti₅O₁₂.

An electrochemical device according to another embodiment may include the aforementioned mixed conductor. When the electrochemical device include a mixed conductor which is chemically stable and simultaneously transfers ions and electrons, the deterioration of the electrochemical device is inhibited.

Examples of the electrochemical device may include, but are not limited to, a battery, an accumulator, a supercapacitor, a fuel cell, a sensor, and an electrochromic device. Any suitable electronic chemical device may be used as long as it may be used in the art.

The battery may be, for example, a primary battery or a secondary battery. Examples of the battery may include, but are not limited to, a lithium battery and a sodium battery. Any suitable battery may be used as long as it may be used in the art. Examples of the lithium battery may include, but are not limited to, a lithium ion battery and a lithium-air battery. Any suitable lithium battery may be used as long as it may be used in the art. Examples of the electrochromic device may include, but are not limited to, an electrochemical mirror, an electrochemical window, an electrochemical screen, and an electrochemical façade. Any suitable electrochromic device may be used as long as it may be used in the art.

The electrochemical device including the mixed conductor may be, for example, a lithium-air battery.

The lithium-air battery may include a cathode. The cathode may be an air electrode. The cathode may be placed, for example, on a cathode current collector.

The cathode may include the aforementioned mixed conductor. In this case, the cathode is configured to use oxygen as a cathode active material. The mixed conductor may function as a reaction site of oxygen and lithium ions transferred from an anode and an electrolyte during discharge, and a discharge product may be deposited on the surface of the mixed conductor. The mixed conductor may serve as a passage for transferring lithium ions and electrons, and may not directly participate in an oxidation and/or a reduction reaction at the time of discharge or charge of the lithium-air battery.

The cathode may further include a conductive material. The conductive material may be porous, for example. The porosity of the conductive material facilitates the penetration of air. Any suitable conductive material may be used as long as it has suitable porosity and/or conductivity and available in the art. For example, the conductive material may be a carbon-based material having suitable porosity. Examples of the carbon-based material may include, but are not limited to, carbon black, graphite, graphene, active carbon, or carbon fiber. Any suitable carbon-based material may be used. The conductive material may be, for example, a metallic material. Examples of the metallic material include metal fiber, metal mesh, or metal powder. Examples of the metal powder include copper powder, silver powder, or aluminum powder. The conductive material may be, for example, an organic conductive material. Examples of the organic conductive material include a polyphenylene derivative or a polythiophene derivative. The conductive material may be used alone or as a mixture thereof. The cathode may include the mixed conductor as a conductive material, and the cathode may further include the aforementioned conductive materials in addition to the mixed conductor.

The cathode may further include a catalyst for oxidation and/or reduction of oxygen. Examples of the catalyst may include, but are not limited to, a metal catalyst comprising a metal, such as platinum, gold, silver, palladium, ruthenium, rhodium, or osmium; an oxide catalyst, such as manganese oxide, iron oxide, cobalt oxide, or nickel oxide; an organic metal catalysts such as cobalt phthalocyanine. Any suitable catalyst may be used as long as it may be used in the art.

The catalyst may be supported on, for example, a carrier. Examples of the carrier may include an oxide carrier, a zeolite carrier, a clay-based mineral carrier, and a carbon carrier. The oxide carrier may be, for example, a metal oxide carrier and may comprise at least one metal or semimetal of Al, Si, Zr, Ti, Ce, Pr, Sm, Eu, Tb, Tm, Yb, Sb, Bi, V, Cr, Mn, Fe, Co, Ni, Cu, Nb, Mo, or W. The oxide carrier may comprise, for example, alumina, silica, zirconium oxide, or titanium dioxide. Examples of the carbon carrier may include, but are not limited to, a carbon black such as Ketjen black, acetylene black, channel black, or lamp black; a graphite such as natural graphite, artificial graphite, or expanded graphite; an active carbon; or a carbon fiber. Any suitable carrier may be used.

The cathode further may include, for example, a binder. The binder may comprise, for example, a thermoplastic resin or a thermosetting resin. Examples of the binder may include, and is not limited to, polyethylene, polypropylene, polytetrafluoroethylene (PTFE), polyvinylidene fluoride (PVDF), styrene-butadiene rubber, a tetrafluoroethylene-perfluoroalkyl vinyl ether copolymer, a vinylidene fluoride-hexafluoropropylene copolymer, a vinylidene fluoride-chlorotrifluoroethylene copolymer, an ethylene-tetrafluoroethylene copolymer, polychlorotrifluoroethylene, a vinylidene fluoride-pentafluoropropylene copolymer, a propylene-tetrafluoroethylene copolymer, an ethylene-chlorotrifluoroethylene copolymer, a vinylidene fluoride-hexafluoropropylene-tetrafluoroethylene copolymer, a vinylidene fluoride-perfluoromethyl vinyl ether-tetrafluoroethylene copolymer, or an ethylene-acrylic acid copolymer, which may be used alone or as a mixture thereof. Any suitable binder may be used.

The cathode may be prepared by, for example, mixing the conductive material, the oxygen oxidation-reduction catalyst, and the binder to obtain a mixture, adding an appropriate solvent to the mixture to obtain a cathode slurry, and then applying the cathode slurry onto the surface of a substrate and drying the applied cathode slurry, or compression-forming the cathode slurry onto the substrate. The substrate may be, for example, a cathode current collector, a separator, or a solid electrolyte film. The cathode current collector may be, for example, a gas diffusion layer. The conductive material may include the mixed conductor, and, in the cathode, the oxygen oxidation-reduction catalyst and the binder may be omitted according to the kind of a required cathode.

The lithium-air battery includes an anode. The anode may comprise lithium.

The anode may be, for example, a lithium metal thin film or a lithium-based alloy thin film. The lithium-based alloy may be, for example, an alloy of lithium and aluminum, tin, magnesium, indium, calcium, titanium, or vanadium.

The lithium-air battery may include an electrolyte layer between the cathode and the anode.

The electrolyte layer may include at least one of a solid electrolyte, a gel electrolyte, or a liquid electrolyte. The solid electrolyte, the gel electrolyte, and the liquid electrolyte are not limited, and any suitable electrolyte may be used.

The solid electrolyte may include, but is not limited to, at least one of a solid electrolyte including an ionically conducting inorganic material, a solid electrolyte including a polymeric ionic liquid and a lithium salt, or a solid electrolyte including an ionically conducting polymer and a lithium salt. Any suitable solid electrolyte may be used.

The ionically conducting inorganic material may include, but is not limited to, at least one of a glassy or amorphous metal ion conductor, a ceramic active metal ion conductor, or a glassy ceramic active metal ion conductor. Any suitable ionically conducting inorganic material may be used. The ionically conducting inorganic material may be made in the form of an ionically conducting inorganic particle or a sheet thereof.

For example, the ionically conducting inorganic material may include at least one of BaTiO₃, Pb(ZraTi₁₋ₐ)O₃ wherein 0≤a≤1 (PZT), Pb₁₋ₓLaₓZr_{1-y} Ti_{y}O₃ (PLZT) wherein 0≤x<1, 0≤y<1; Pb(Mg₃Nb_{2/3})O₃-PbTiO₃ (PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, SiC, lithium phosphate (Li₃PO₄), lithium titanium phosphate (LiₓTi_{y}(PO₄)₃, wherein 0<x<2, 0<y<3), lithium aluminum titanium phosphate (LiₓAl_{y}Ti_{z}(PO₄)₃, wherein 0<x<2, 0<y<1, and 0<z<3), Li_{1+x+y}(AlₐGa₁₋ₐ)ₓ(Ti_{b}Ge_{1-b})₂₋ₓSi_{y}P_{3-y}O₁₂, wherein 0≤x≤1, 0≤y≤1, 0≤a≤1, 0≤b≤1); lithium lanthanum titanate (LiₓLa_{y}TiO₃, wherein 0<x<2, 0<y<3), lithium germanium thiophosphate (LiₓGe_{y}P_{z}S_{w}, wherein 0<x<4, 0<y<1, 0<z<1, and 0<w<5), lithium nitride (LiₓN_{y}, wherein 0<x<4, 0<y<2), SiS₂-based glass (LiₓSi_{y}S_{z}, wherein 0<x<3,0<y<2, and 0<z<4), P₂S₅-based glass (LiₓP_{y}S_{z}, wherein 0<x<3, 0<y<3, and 0<z<7), Li₂O, LiF, LiOH, Li₂CO₃, a LiAlO₂, Li₂O-Al₂O₃-SiO₂-P₂O₅-TiO₂-GeO₂-based ceramics, or a garnet-based ceramics (Li₃₊ₓLa₃M₂O₁₂ wherein M = Te, Nb, Zr, and 0≤x≤4), or a combination thereof.

The polymeric ionic liquid may include a repeating unit which may include i) at least one cation of an ammonium cation, a pyrrolidinium cation, a pyridinium cation, a pyrimidinium cation, an imidazolium cation, a piperidinum cation, a pyrazolium cation, an oxazolium cation, a pyridazinium cation, a phosphonium cation, a sulfonium cation, a triazolium cation, or mixtures thereof, and ii) at least one of BF₄-, PF₆-, AsF₆-, SbF₆-, AlCl₄-, HSO₄-, ClO₄-, CH₃SO₃-, CF₃CO₂-, (CF₃SO₂)₂N-, CI-, Br-, I-, SO₄²⁻, CF₃SO₃-, (C₂F₅SO₂)₂N-, (C₂F₅SO₂)(CF₃SO₂)N-, NO₃⁻, Al₂Cl₇⁻, CH₃COO⁻, (CF₃SO₂)₃C⁻, (CF₃)₂PF₄⁻, (CF₃)₃PF₃⁻, (CF₃)₄PF₂⁻, (CF₃)₅PF⁻, (CF₃)₆P⁻, SF₅CF₂SO₃⁻, SF₅CHFCF₂SO₃⁻, CF₃CF₂(CF₃)₂CO⁻, (CF₃SO₂)₂CH⁻, (SF₅)₃C⁻, or (O(CF₃)₂C₂(CF₃)₂O)₂PO⁻ Examples of the polymeric ionic liquid may include poly(diallyldimethylammonium bis(trifluoromethanesulfonyl)imide), poly(1-allyl-3-methylimidazolium bis(trifluoromethanesulfonyl)imide), and poly(N-Methyl-N-propylpiperidinium bis(trifluoromethanesulfonyl)imide).

The ionically conducting polymer may include at least one ionically conductive repeating unit derived from an ether-based monomer, an acrylic monomer, a methacrylic monomer, or a siloxane-based monomer.

Examples of the ionically conducting polymer may include, but are not limited to, polyethylene oxide (PEO), polyvinyl alcohol (PVA), polyvinyl pyrrolidone (PVP), polyvinyl sulfone, polypropylene oxide (PPO), polymethyl methacrylate, polyethyl methacrylate, polydimethylsiloxane, polyacrylic acid, polymethacrylic acid, polymethyl acrylate, polyethyl acrylate, poly 2-ethylhexyl acrylate, polybutyl methacrylate, poly 2-ethylhexyl methacrylate, polydecyl acrylate, polyethylene vinyl acetate, a phosphate ester polymer, polyester sulfide, polyvinylidene fluoride (PVdF), or a Li-substituted NAFION (Li-Nafion). Any suitable ionically conducting polymer may be used.

Examples of the electronically conducting polymer may include, but are not limited to, a polyphenylene derivative and a polythiophene derivative. Any suitable electronically conducting polymer may be used.

The gel electrolyte may be obtained by adding a low-molecular solvent to the solid electrolyte between the anode and the cathode. The gel electrolyte may be obtained by adding a solvent, an oligomer, or the like, which may be a low-molecular organic compound, to a polymer. The gel electrolyte may be obtained by adding a solvent, an oligomer, or the like, which may be a low-molecular organic compound, to the aforementioned polymer electrolyte.

The liquid electrolyte may include a solvent and a lithium salt.

The solvent may include, but is not limited to, at least one of an organic solvent, an ionic liquid, or an oligomer. Any suitable solvent may be used as long as it may be a liquid at room temperature (25 °C) and may be used in the art.

The organic solvent may include at least one of an ether-based solvent, a carbonate-based solvent, an ester-based solvent, or a ketone-based solvent. Examples of the organic solvent may include, but are not limited to, propylene carbonate, ethylene carbonate, fluoroethylene carbonate, vinylethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, γ-butyrolactone, dioxolane, 4-methyldioxolane, dimethylacetamide, dimethylsulfoxide, dioxane, 1,2-dimethoxyethane, sulfolane, dichloroethane, chlorobenzene, nitrobenzene, succinonitrile, diethylene glycol dimethyl ether (DEGDME), tetraethylene glycol dimethyl ether (TEGDME), polyethylene glycol dimethyl ether (PEGDME, Mn = ∼ 500), dimethyl ether, diethyl ether, dibutyl ether, dimethoxyethane, 2-methyltetrahydrofuran, or tetrahydrofuran. Any suitable organic solvent may be used as long as it may be a liquid at room temperature (25 °C).

The ionic liquid (IL) may include i) at least one cation of an ammonium cation, a pyrrolidinium cation, a pyridinium cation, a pyrimidinium cation, an imidazolium cation, a piperidinum cation, a pyrazolium cation, an oxazolium cation, a pyridazinium cation, a phosphonium cation, a sulfonium cation, a triazolium cation, or mixtures thereof, and ii) at least one anion of BF₄-, PF₆-, AsF₆-, SbF₆-, AlCl₄-, HSO₄-, ClO₄-, CH₃SO₃-, CF₃CO₂-, (CF₃SO₂)₂N-, CI-, Br-, I-, BF₄-, SO₄²⁻, CF₃SO₃-, (C₂F₅SO₂)₂N-, (C₂F₅SO₂)(CF₃SO₂)N-, NO₃⁻, Al₂Cl₇⁻, CF₃COO⁻, CH₃COO⁻, (CF₃SO₂)₃C⁻, (CF₃)₂PF₄⁻, (CF₃)₃PF₃⁻, (CF₃)₄PF₂⁻, (CF₃)₅PF⁻, (CF₃)₆P⁻, SF₅CF₂SO₃⁻, SF₅CHFCF₂SO₃⁻, CF₃CF₂(CF₃)₂CO⁻, (CF₃SO₂)₂CH⁻, (SF₅)₃C⁻, or (O(CF₃)₂C₂(CF₃)₂O)₂PO⁻.

The lithium salt may include, but is not limited to, at least one of LiTFSI (LiN(SO₂CF₃)₂), LiPF₆, LiBF₄, LiAsF₆, LiClO₄, LiNO₃, (lithium bis(oxalato) borate(LiBOB), LiN(SO₂C₂F₅)₂, LiC(SO₂CF₃)₃, LiN(SO₃CF₃)₂, LiC₄F₉SO₃, LiAlCl₄, or LiTfO (lithium trifluoromethanesulfonate, LiCF₃SO₃,). Any suitable lithium salt may be used as long as it may be used in the art. The concentration of the lithium salt may be, for example, about 0.01 mole/L (M) to 5.0 M.

The lithium-air battery may further include a separator between the cathode and the anode. The separator is not limited as long as it can withstand the potential range of the lithium-air battery. For example, the separator may include a polymer nonwoven fabric such as a nonwoven fabric made of polypropylene or a nonwoven fabric made of polyphenylene sulfide, a porous film made of polyolefin such as polyethylene or polypropylene, or a glass fiber, and may include a combination of two or more thereof.

The electrolyte layer may have, for example, a structure in which a separator is impregnated with a solid polymer electrolyte or a structure in which a separator is impregnated with a liquid electrolyte. The electrolyte layer having a structure in which a separator is impregnated with a solid polymer electrolyte may be prepared by, for example, applying a solid polymer electrolyte film onto one side or both sides of the separator, and then, simultaneously roll-pressing the solid polymer electrolyte film and the separator. The electrolyte layer having a structure in which a separator is impregnated with a liquid electrolyte may be prepared by, for example, injecting a liquid electrolyte including a lithium salt into the separator.

The lithium-air battery may be completed by placing an anode at one side surface in a case, placing an electrolyte layer on the anode, placing a cathode on the electrolyte layer, placing a porous cathode current collector on the cathode, placing a pressing member on the porous cathode current collector to transfer air to an air electrode, and pushing the pressing member to fix a cell. The case may be separated into an upper portion contacting the anode and a lower portion contacting the air electrode, and an insulating resin is interposed between the upper portion and the lower portion to electrically insulate the cathode from the anode.

The lithium-air battery may be used for both primary and secondary batteries. The shape of the lithium-air battery is not limited, and examples thereof include a coin, a button, a sheet, a laminate, a cylinder, a plate, and a cone. The lithium-air battery may be also applicable to medium and large batteries for electric vehicles.

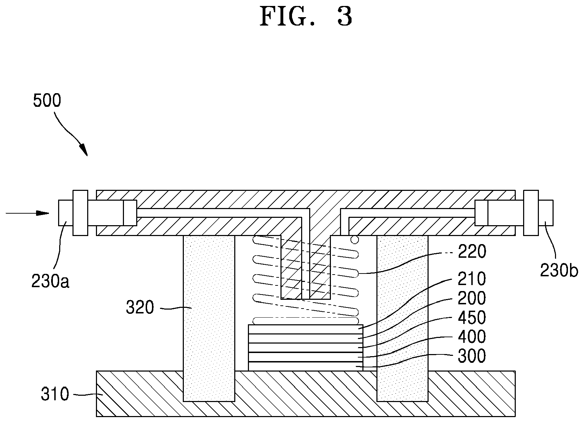

FIG. 3 schematically illustrates the structure of a lithium-air battery according to an embodiment. The lithium-air battery 500 includes a cathode 200 adjacent to a first current collector 210 and configured to use oxygen as an active material, an anode 300 adjacent to a second current collector 310 and including lithium, and a first electrolyte layer 400 interposed between the cathode 200 and the anode 300. The first electrolyte layer 400 is a separator impregnated with a liquid electrolyte. A second electrolyte layer 450 is placed between the cathode 200 and the first electrolyte layer 400. The second electrolyte layer 450 is a solid electrolyte film having lithium ion conductivity. The first current collector 210 may also serve as a gas diffusion layer that is porous and is capable of diffusing air. A pressing member 220 is placed on the first current collector 210 to transfer air to the cathode. A case 320 made of an insulating resin material is interposed between the cathode 200 and the anode 300 to electrically separate the cathode 200 and the anode 300. Air is supplied into an air inlet 230a and is discharged to the outside through an air outlet 230b. The lithium-air battery may be housed in a stainless steel container.

As used herein, the term "air" is not limited to atmospheric air, and may include a combination of gases including oxygen or pure oxygen gas. The broad definition of this term "air" may be applied to all applications, for example, air batteries, air electrodes, and the like.

A method of preparing a mixed conductor according to an embodiment may include: mixing an element A precursor and an element M precursor to prepare a mixture; and heat-treating the mixture in a solid phase to prepare a mixed conductor.

The preparing of the mixture may further include mixing an element M' precursor and an element M" precursor, which are different from each other.

The preparing of the mixture may be performed by ball-milling the element A precursor, the element M precursor, and, if desired, the element M' precursor and the element M" precursor under an organic solvent and/or an aqueous solution. The organic solvent may be alcohol such as 2-propanol or ethanol, but is not limited thereto. Any suitable organic solvent may be used. The process of reacting the mixture in a solid phase may mean that the reaction proceeds by heat-treatment in the absence of solvent.

The mixed conductor to be prepared refers to the above description.

The element A precursor may be a salt of A, an oxide of A, a hydroxide of A ,or a carbonate of A, the element M precursor may be a salt of M, an oxide of M, a hydroxide of M, or a carbonate of M, the element M' precursor may be a salt of M', an oxide of M', a hydroxide of M',or a carbonate of M', and the element M" precursor may be a salt of M", an oxide of M", a hydroxide of M",or a carbonate of M".

The element A precursor may be, for example, a lithium precursor. Examples of the lithium precursor may include, but are not limited to, Li₂CO₃, LiNO₃, LiNO₂, LiOH, LiOH.H₂O, LiH, LiF, LiCI, LiBr, Lil, CH₃OOLi, Li₂O, Li₂SO₄, lithium carboxylate, lithium citrate, lithium fatty acid, and alkyl lithium. Any suitable lithium precursor may be used as long as it may be used in the art. For example, the lithium precursor may be LiOH or Li₂CO₃.

The element M precursor may include at least one of alkoxide, chloride, oxide, hydroxide, nitrate, carbonate, or acetate, each including at least one metal element of group 2 to 16 elements excluding Ti or Mn, but is not limited thereto. For example, the element precursor M may be NiO₂.

The element M' precursor may include at least one of alkoxide, chloride, oxide, hydroxide, nitrate, carbonate, or acetate, each may include at least one metal element of group 2 to 16 elements excluding Ti or Mn, but is not limited thereto. Any suitable element M' precursor may be used as long as it may be used in the art. For example, the element M' precursor may be NiO₂.

The element M" precursor may include at least one of an alkoxide, a chloride, an oxide, a hydroxide, a nitrate, a carbonate, or an acetate, and each may include at least one metal element of V, Nb, Ta, or Tc, but is not limited thereto. Any suitable element M" precursor may be used as long as it may be used in the art. For example, the element M" precursor may be Nb₃O₅.

In the method of preparing a mixed conductor, the preparing of the mixed conductor by reacting the mixture in the solid phase may include: drying the mixture and performing first heat treatment on the dried mixture in an oxidizing atmosphere to prepare a first heat-treated product; pulverizing and pressing the first heat-treated product to prepare a pellet; and performing second heat treatment on the pellet in a reducing atmosphere, an oxidizing atmosphere, or an oxidizing atmosphere and a reducing atmosphere.

In the second heat treatment, the reducing atmosphere, the oxidizing atmosphere, or the oxidizing atmosphere and the reducing atmosphere may be selected depending on the oxidation number of the metal included in a targeted mixed conductor.

The reducing atmosphere may be an atmosphere including a reducing gas. The reducing gas may be, for example, hydrogen (H₂), but is not limited thereto. Any suitable reducing gas may be used. The reducing atmosphere may be a mixture of a reducing gas and an inert gas. The inert gas may be, for example, nitrogen or argon, but is not limited thereto. Any suitable inert gas may be used. The amount of the reducing gas in the reducing atmosphere may be, for example, about 1 volume percent (vol%) to about 99 vol%, about 2 vol% to about 50 vol%, or about 5 vol% to about 20 vol%, based on the total volume of the reducing atmosphere. Heat treatment may be carried out under the reducing atmosphere, and an oxygen vacancy may be introduced into the mixed conductor by the heat treatment carried out under the reducing atmosphere.

The oxidizing atmosphere may be an atmosphere including an oxidizing gas. The oxidizing gas may be, for example, oxygen or air, but is not limited thereto. Any suitable oxidizing gas may be used as long as it may be used in the art. The oxidizing atmosphere may be a mixture of an oxidizing gas and an inert gas. The inert gas may be the same as the inert gas used in the reducing atmosphere.

The second heat treatment in the oxidizing atmosphere and the reducing atmosphere refers to second heat treatment in which the heat treatment in the oxidizing atmosphere and the heat treatment in the reducing atmosphere may be sequentially carried out. The oxidizing atmosphere and the reducing atmosphere may be the same as the aforementioned oxidizing atmosphere and the aforementioned reducing atmosphere.

The first heat treatment may be carried out, for example, at about 600 °C to about 1,000 °C, about 700 °C to about 900 °C, or about 750 °C to about 850 °C. The first heat treatment time may be about 2 hours to about 10 hours, about 3 hours to about 9 hours, about 4 hours to about 8 hours, or about 4 hours to about 6 hours. The second heat treatment may be carried out, for example, at about 700 °C to about 1,400 °C, about 800 °C to about 1,300 °C, about 900 °C to about 1,200 °C, or about 900 °C to about 1,100 °C. The second heat treatment time may be about 6 hours to about 48 hours, about 10 hours to about 40 hours, about 15 hours to about 35 hours, or about 20 hours to about 30 hours. The first heat treatment and the second heat treatment may be carried out under these conditions, and thus the electrochemical stability of the prepared mixed conductor is further improved.

Hereinafter, the present disclosure will be described in more detail with reference to Examples and Comparative Examples. However, these examples are set forth to illustrate the present disclosure, and the scope of the present disclosure is not limited thereto.

### EXAMPLES

### Preparation of mixed conductor

### Example 1 (LiNi₂O₄)

A lithium precursor Li₂CO₃ and a nickel precursor Ni(OH)₂ were mixed with each other in a stoichiometric ratio, mixed with ethanol, and then pulverized and mixed using a planetary ball mill including zirconia balls at 280 rpm for 4 hours to obtain a mixture. The obtained mixture was dried at 90 °C for 6 hours, and then primarily heat-treated at 650 °C for 5 hours in an air atmosphere. The primarily heat-treated mixture was pulverized for 4 hours using a ball mill, and then the mixture was secondarily dried at 90 °C for 6 hours. The secondarily dried mixture was pressed at isostatic pressure to obtain pellets. The obtained pellets were secondarily heat-treated at 950 °C for 24 hours in an air atmosphere to prepare a mixed conductor. The composition of the prepared mixed conductor was LiNi₂O₄.

### Example 2 (LiNi_{1.9}Nb_{0.1}O₄)

A lithium precursor Li₂CO₃, a nickel precursor Ni(OH)₂, and a niobium precursor Nb₂O₅, were mixed with each other in a stoichiometric ratio, mixed with ethanol, and then pulverized and mixed by using a planetary ball mill including zirconia balls at 280 rpm for 4 hours to obtain a mixture. The obtained mixture was dried at 90 °C for 6 hours, and then primarily heat-treated at 650 °C for 5 hours in an air atmosphere. The primarily heat-treated mixture was pulverized for 4 hours using a ball mill, and then the mixture was secondarily dried at 90 °C for 6 hours. The secondarily dried mixture was pressed at isostatic pressure to obtain pellets. The obtained pellets were secondarily heat-treated at 950 °C for 24 hours in an air atmosphere to prepare a mixed conductor. The composition of the prepared mixed conductor was LiNi_{1.9}Nb_{0.1}O₄.

### Example 3 (LiNi_{1.8}Nb_{0.2}O₄)

A lithium precursor Li₂CO₃, a nickel precursor Ni(OH)₂, and a niobium precursor Nb₂O₅ were mixed with each other in a stoichiometric ratio, followed by the addition of ethanol, and then pulverized and mixed by using a planetary ball mill including zirconia balls at 280 rpm for 4 hours to obtain a mixture. The obtained mixture was dried at 90 °C for 6 hours, and then primarily heat-treated at 650 °C for 5 hours in an air atmosphere. The primarily heat-treated mixture was pulverized for 4 hours by using a ball mill, and then the mixture was secondarily dried at 90 °C for 6 hours. The secondarily dried mixture was pressed at isostatic pressure to obtain pellets. The obtained pellets were secondarily heat-treated at 950 °C for 24 hours in an air atmosphere to prepare a mixed conductor. The composition of the prepared mixed conductor was LiNi_{1.8}Nb_{0.2}O₄.

### Comparative Example 1 (Li₄Ti₅O₁₂)

Commercially available Li₄Ti₅O₁₂ powder was pressed at isostatic pressure in the same manner as in Example 1 to prepare pellets.

### Evaluation Example 1: Evaluation of electronic conductivity

Gold (Au) was sputtered on both sides of each of the mixed conductor pellets prepared in Examples 1 to 3 and Comparative Example 1 to complete an ion blocking cell. The electronic conductivity thereof was measured using a DC polarization method.

The time dependent current obtained when a constant voltage of 100 millivolts (mV) was applied to the completed symmetric cell for 30 minutes was measured. The electronic resistance of the mixed conductor was calculated from the measured current, and the electronic conductivity of the mixed conductor was calculated from the calculated electronic resistance. The calculated electronic conductivity are given in Table 1 below.

### Evaluation Example 2: Evaluation of ionic conductivity

A separator layer impregnated with a liquid electrolyte (1M LiTFSI in propylene carbonate (PC)) was placed on both sides of each of the mixed conductor pellets prepared in Examples 1 to 3 and Comparative Example 1, and a stainless steel current collector was placed on a separator layer to complete an electron blocking cell. The ionic conductivity thereof was measured using a DC polarization method.

The time dependent current obtained when a constant voltage of 100 mV was applied to the completed symmetric cell for 30 minutes was measured. After the resistance of the cell was calculated from the measured current, the ionic resistance of a solid electrolyte layer was subtracted from the ionic resistance of the cell to calculate the ionic resistance of the mixed conductor, and the ionic conductivity was calculated from the calculated ionic resistance. The calculated ionic conductivity is given in Table 1 below.

**Table 1**

| | Composition | Electronic conductivity (S/cm) | Ionic conductivity (S/cm) |
|---|---|---|---|
| Comparative Example 1 | Li₄Ti₅O₁₂ | 4.3 x 10⁻⁹ | 6.8 x 10⁻⁸ |
| Example 1 | LiNi₂O₄ | 1.66 x 10⁻³ | 1.63 x 10⁻⁴ |
| Example 2 | LiNi_{1.9}Nb_{0.1}O₄ | 4.72 x 10⁻⁵ | 3.67 x 10⁻⁷ |
| Example 3 | LiNi_{1.8}Nb_{0.2}O₄ | 2.42 x 10⁻⁵ | 2.2 x 10⁻⁶ |

As shown in Table 1 above, the mixed conductors prepared in Examples 1 to 3 were improved in both electronic conductivity and ionic conductivity as compared with those of the conductor of Comparative Example 1.

### Evaluation Example 3: Evaluation of XRD

Crystals of the mixed conductors of Examples 1 to 3 were analyzed by an X-ray powder diffraction (XRD) . The results thereof are shown in FIG. 2.

Referring to FIG. 2, since the LiNi₂O₄ of Example 1 and the mixed conductors of Examples 2 and 3 in which a part of Ni was substituted with Nb ions show the same XRD pattern, it was found that in the examples with the Nb substitution, Nb was substituted on the site of Ni without collapse or change of a crystal structure.

According to the embodiment, when the mixed conductors that are chemically stable and simultaneously transfer ions and electrons are used, the deterioration of the electrochemical device is inhibited.

It should be understood that embodiment described herein should be considered in a descriptive sense only and not for purposes of limitation. Descriptions of features or aspects within each embodiment should be considered as available for other similar features or aspects in the disclosed embodiment.

While an embodiments have been described with reference to the figures, it will be understood by those of ordinary skill in the art that various changes in form and details may be made therein without departing from the scope as defined by the following claims.

## Claims

1. A mixed conductor represented by Formula 1:
Formula 1 A_{1±x}M_{2±y}O_{4-δ}
wherein, in Formula 1, A is at least one Group 1 element of the Periodic Table of the Elements,
M is at least one metal element of Groups 2 to 16 of the Periodic Table of the Elements, with the proviso that M is neither Ti nor Mn, and
wherein, in Formula 1, 0≤x<1, 0≤y≤1, and 0≤δ≤1 are satisfied.

2. The mixed conductor of claim 1,
wherein A is at least one of Li, Na, K, Rb, or Cs, and optionally wherein A is Li.

3. The mixed conductor of claim 1, wherein M is at least one of Mg, Ca, Sr, Fe, Ru, Co, Ni, Pd, Ag, Pt, Cu, Zn, Cd, Hg, Ge, Sn, Pb, Po, Sc, Y, La, Ce, Pr, Nd, Pm, Sm, Eu, Gd, Tb, Dy, Ho, Er, Tm, Yb, Lu, Cr, Rh, Au, Al, Ga, In, TI, Sb, Bi, Zr, Hf, Mo, Re, Ir, V, Nb, Ta, or Tc, and optionally wherein M is at least one of Ni, V, Nb, or Ta.

4. The mixed conductor of claim 1, wherein, in Formula 1, either: x=0, 0≤y<1; or 0≤x<1, y=0, and wherein 0≤δ≤1.

5. The mixed conductor of any of claims 1 to 3, wherein, in Formula 1, 0≤x<1, 0≤y<1, and δ=0.

6. The mixed conductor of claim 1, wherein Formula 1 is represented by Formula 2:
Formula 2 A_{1±x'}M'_{2-z'}M"_{z'}O_{4-δ'}
wherein, in Formula 2,
A is at least one Group 1 element of the Periodic Table of the Elements,
M' and M" are each independently at least one metal element of Groups 2 to 16 of the Periodic Table of the Elements, with the proviso that M' or M" is neither Ti nor Mn, and
wherein, in Formula 2, 0≤x'<1, 0<z'≤1, and 0≤δ'≤1 are satisfied, and optionally wherein A is Li.

7. The mixed conductor of claim 6, wherein M' and M" have different oxidation numbers from each other,
and optionally wherein the oxidation number of the metal element of M' is less than the oxidation number of the metal element of M".

8. The mixed conductor of any preceding claim, wherein the mixed conductor comprises Li_{1±x}Co_{2±y}O_{4-δ} wherein 0≤x<1, 0≤y≤1, and 0≤δ≤1; Li_{1±x}Ni_{2±y}O_{4-δ} wherein 0≤x<1, 0≤y≤1, and 0≤δ≤1; Li_{1±x}Fe_{2±y}O_{4-δ} wherein 0≤x<1, 0≤y≤1, and 0≤δ≤1; Li_{1±x}Zr_{2±y}O_{4-δ} wherein 0≤x<1, 0≤y≤1, and 0≤δ≤1; Li_{1±x}Cu_{2±y}O_{4-δ} wherein 0≤x<1, 0≤y≤1, and 0≤δ≤1; Li_{1±x}Zn_{2±y}O_{4-δ} wherein 0≤x<1, 0≤y≤1, and 0≤δ≤1; Li_{1±x}Mo_{2±y}O_{4-δ} wherein 0≤x<1, 0≤y≤1, and 0≤δ≤1; Li_{1±x}Ru_{2±y}O_{4-δ} wherein 0≤x<1, 0≤y≤1, and 0≤δ≤1; Li_{1±x}Pd_{2±y}O_{4-δ} wherein 0≤x<1, 0≤y≤1, and 0≤δ≤1; Li_{1±x}Ag_{2±y}O_{4-δ} wherein 0≤x<1, 0≤y≤1, and 0≤δ≤1; Li_{1±x'}Co_{2-z'}V_{z'}O_{4-δ'} wherein 0≤x'<1, 0<z'≤1, and 0≤δ'≤1; Li_{1±x'}Ni_{2-z'}V_{z'}O_{4-δ'} wherein 0≤x'<1, 0<z'≤1, and 0≤δ'≤1; Li_{1±x'}Fe_{2-z'}V_{z'}O_{4-δ'} wherein 0≤x'<1, 0<z'≤1, and 0≤δ'≤1; Li_{1±x'}Zr_{2-z'}O_{4-δ'} wherein 0≤x'<1, 0<z'≤1, and 0≤δ'≤1; Li_{1±x'}Cu_{2-z'}V_{z'}O_{4-δ'} wherein 0≤x'<1, 0<z'≤1, and 0≤δ'≤1; Li_{1±x'}Zn_{2-z'}V_{z'}O_{4-δ'} wherein 0≤x'<1, 0<z'≤1, and 0≤δ'≤1; Li_{1±x'}Mo_{2-z'}V_{z'}O_{4-δ'} wherein 0≤x'<1, 0<z'≤1, and 0≤δ'≤1; Li_{1±x'}Ru_{2-z'}V_{z'}O_{4-δ'} wherein 0≤x'<1, 0<z'≤1, and 0≤δ'≤1; Li_{1±x'}Pd_{2-z'}V_{z'}O_{4-δ'} wherein 0≤x'<1, 0<z'≤1, and 0≤δ'≤1; Li_{1±x'}Ag_{2-z'}V_{z'}O_{4-δ'} wherein 0≤x'<1, 0<z'≤1, and 0≤δ'≤1; Li_{1±x'}Co_{2-z'}Nb_{z'}O_{4-δ'} wherein 0≤x'<1, 0<z'≤1, and 0≤δ'≤1; Li_{1±x'}Ni_{2-z'}Nb_{z'}O_{4-δ'} wherein 0≤x'<1, 0<z'≤1, and 0≤δ'≤1; Li_{1±x'}Fe_{2-z'}Nb_{z'}O_{4-δ'} wherein 0≤x'<1, 0<z'≤1, and 0≤δ'≤1; Li_{1±x'}Zr_{2-z'}Nb_{z'}O_{4-δ'} wherein 0≤x'<1, 0<z'≤1, and 0≤δ'≤1; Li_{1±x'}Cu_{2-z'}Nb_{z'}O_{4-δ'} wherein 0≤x'<1, 0<z'≤1, and 0≤δ'≤1; Li_{1±x'}Zn_{2-z'}Nb_{z'}O_{4-δ'} wherein 0≤x'<1, 0<z'≤1, and 0≤δ'≤1; Li_{1±x'}Mo_{2-z'}Nb_{z'}O_{4-δ'} wherein 0≤x'<1, 0<z'≤1, and 0≤δ'≤1; Li_{1±x'}Ru_{2-z'}Nb_{z'}O_{4-δ'} wherein 0≤x'<1, 0<z'≤1, and 0≤δ'≤1; Li_{1±x'}Pd_{2-z'}Nb_{z'}O_{4-δ'} wherein 0≤x'<1, 0<z'≤1, and 0≤δ'≤1; Li_{1±x'}Ag_{2-z'}Nb_{z'}O_{4-δ'} wherein 0≤x'<1, 0<z'≤1, and 0≤δ'≤1; Li_{1±x'}Co_{2-z'}Ta_{z'}O_{4-δ'} wherein 0≤x'<1, 0<z'≤1, and 0≤δ'≤1; Li_{1±x'}Ni_{2-z'}Ta_{z'}O_{4-δ'} wherein 0≤x'<1, 0<z'≤1, and 0≤δ'≤1; Li_{1±x'}Fe_{2-z'}Ta_{z'}O_{4-δ'} wherein 0≤x'<1, 0<z'≤1, and 0≤δ'≤1; Li_{1±x'}Zr_{2-z'}Ta_{z'}O_{4-δ'} wherein 0≤x'<1, 0<z'≤1, and 0≤δ'≤1; Li_{1±x'}Cu_{2-z'}Ta_{z'}O_{4-δ'} wherein 0≤x'<1, 0<z'≤1, and 0≤δ'≤1; Li_{1±x'}Zn_{2-z'}Ta_{z'}O_{4-δ'} wherein 0≤x'<1, 0<z'≤1, and 0≤δ'≤1; Li_{1±x'}Mo_{2-z'}Ta_{z'}O_{4-δ'} wherein 0≤x'<1, 0<z'≤1, and 0≤δ'≤1; Li_{1±x'}Ru_{2-z}Ta_{z'}O_{4-δ'} wherein 0≤x'<1, 0<z'≤1, and 0≤δ'≤1; Li_{1±x'}Pd_{2-z'}Ta_{z'}O_{4-δ'} wherein 0≤x'<1, 0<z'≤1, and 0≤δ'≤1; Li_{1±x'}Ag_{2-z'}Ta_{z'}O_{4-δ'} wherein 0≤x'<1, 0<z'≤1, and 0≤δ'≤1; or a combination thereof.

9. The mixed conductor of any preceding claim, wherein the mixed conductor comprises a phase having a spinel crystal structure, and optionally wherein the spinel crystal structure has an Fd3m space group.

10. The mixed conductor of any preceding claim, wherein the mixed conductor has a peak at a diffraction angle of 36.0±2.5° two-theta, and a peak at a diffraction angle of 43.0±2.5° two-theta, when analyzed by X-ray powder diffraction with Cu Kα radiation.

11. The mixed conductor of any preceding claim, wherein the mixed conductor has at least one of: an electronic conductivity of 4.5x10⁻⁹ Siemens per centimeter to 2x10⁻³ Siemens per centimeter and an ionic conductivity of 7x10⁻⁸ Siemens per centimeter to 2x10⁻⁴ Siemens per centimeter.

12. The mixed conductor of any preceding claim,wherein a bandgap of the mixed conductor between a valence band and a conduction band is less than a bandgap of Li₄Ti₅O₁₂.

13. A lithium-air battery, comprising:
a cathode comprising the mixed conductor of any preceding claim;
an anode comprising a lithium metal; and
an electrolyte between the cathode and the anode, and optionally wherein the cathode is configured to use oxygen as a cathode active material, and optionally wherein the electrolyte comprises a solid electrolyte.

14. A method of preparing a mixed conductor, the method comprising:
providing an element A precursor;
mixing the element A precursor and an element M precursor to prepare a mixture; and
heat-treating the mixture in a solid phase to prepare the mixed conductor, wherein
A is at least one Group 1 element of the Periodic Table of the Elements, and
M is at least one metal element of Groups 2 to 16 of the Periodic Table of the Elements, with the proviso that M is neither Ti nor Mn.

15. The method of claim 14, wherein an element M precursor is an element M'
precursor and an element M" precursor, and
wherein the preparing of the mixture comprises mixing the element M' precursor and the element M" precursor, which are different from each other.
